# EUROPÄISCHE PATENTSCHRIFT

(11) **EP 2 651 659 B1**
(45) Veröffentlichungstag und Bekanntmachung des Hinweises auf die Patenterteilung: **18.01.2017**
(21) Anmeldenummer: 11784468.8
(22) Anmeldetag: 11.11.2011
(51) Int. Cl.: B60C 9/20

(54) **FAHRZEUGLUFTREIFEN**
PNEUMATIC VEHICLE TYRE
PNEUMATIQUE DE VÉHICULE

(30) Priorität: 17.12.2010 DE 102010061329
(43) Veröffentlichungstag der Anmeldung: 23.10.2013
(60) Teilanmeldung: 16184634.0
(73) Patentinhaber: Continental Reifen Deutschland GmbH, 30165 Hannover (DE)
(72) Erfinder: BECKER, Theresia, 40625 Hannover (DE); GLASEWALD, Thomas, 30926 Seelze (DE)
(74) Vertreter: Preusser, Andrea
(86) Internationale Anmeldenummer: PCT/EP2011/069914
(87) Internationale Veröffentlichungsnummer: WO 2012/079870

(56) Entgegenhaltungen:
- US-A- 4 310 043
- US-A- 4 518 024
- US-A- 5 318 643

## Beschreibung

Die Erfindung betrifft einen Fahrzeugluftreifen für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus mehreren von radial innen nach radial außen auf einander liegend angeordneten Gürtellagen ausgebildet ist, von denen wenigstens zwei Gürtellagen als Arbeitslagen ausgebildet sind, wobei die radial innere und die radial äußere der beiden Arbeitslagen Gürtellagen mit in Gummi eingebetteten parallelen Festigkeitsträgern aus Stahl sind, wobei die Festigkeitsträger der radial inneren Arbeitslage in ihrer Ausrichtung einen Winkel α zur Umfangsrichtung U mit 10°≤α≤24°und die Festigkeitsträger der radial äußeren Arbeitslage einen Winkel γ zur Umfangsrichtung U mit 10°≤γ≤24°einschließen, wobei in Umfangsrichtung U des Fahrzeugreifens gesehen die Festigkeitsträger der einen Arbeitslage eine entgegengesetzte axiale Neigungsrichtung zu den Festigkeitsträgern der anderen Arbeitslage aufweisen.

Fahrzeugluftreifen für Nutzfahrzeuge sind bekannt, bei denen der Gürtel aus vier in radialer Richtung übereinander angeordneten Gürtellagen ausgebildet ist, von denen zwei Gürtellagen als Arbeitslagen ausgebildet sind, deren Festigkeitsträger in ihrem Verlauf jeweils unter Einschluss eines Winkels von 15° bis 24° zur Umfangsrichtung des Fahrzeugreifens ausgerichtet sind. Die Festigkeitsträger der einen Arbeitslage weisen dabei eine entgegengesetzte axiale Neigungsrichtung zu den Festigkeitsträgern der anderen Arbeitslage auf. Die beiden Arbeitslagen bilden hierdurch einen Kreuzverband. Der Gürtel weist darüber hinaus üblicher Weise unterhalb der Arbeitslagen eine als Sperrlage ausgebildete Gürtellage auf, deren Festigkeitsträger in ihrem Verlauf einen Winkel von 45° bis 70° zur Umfangsrichtung einschließen. Darüber hinaus ist als vierte Lage üblicher Weise radial oberhalb der beiden Arbeitslagen eine zusätzliche Schutzlage ausgebildet, deren Festigkeitsträger in ihrem Verlauf einen Winkel von 15° bis 24° zur Umfangsrichtung einschließen. Die Festigkeitsträger dieser Gürtellagen sind Stahlcorde. Die bekannten Fahrzeugreifen sind dabei jeweils mit einem Gürtel ausgebildet, welcher in beiden Arbeitslagen jeweils den gleichen Außendurchmesser ihrer Stahlcorde und die gleiche Corddichte aufweist. Dabei werden zur Erzielung einer hohen Umfangssteifigkeit und Schersteifigkeit des Gürtels beide Arbeitslagen mit einer gleichermaßen hohen Corddichte, d. h. mit kleinen, aber gleichen Abständen zwischen jeweils in einer Arbeitslage benachbarten Corden ausgebildet. Hierdurch wird eine hohe Umfangssteifigkeit und Schersteifigkeit des Gürtels, ein gutes Abriebsbild und eine gute Abriebsrate des Reifens ermöglicht. Allerdings führt die hohe Corddichte in den beiden eng beieinander angeordneten Arbeitslagen zu hohen Spannungen im Reifen im Bereich der Cordenden, welche ohne zusätzliche Maßnahmen zu Gürtelkantenablösung führen können und somit die Haltbarkeit des Gürtels und des Fahrzeugreifens beeinträchtigen. Daneben ist es bekannt, derartige Gürtel in beiden Arbeitslagen mit einer geringen Corddichte und somit mit einem größeren Abstand zwischen den benachbarten Corden einer Arbeitslage auszubilden, jedoch unter Inkaufnahme von reduzierter Gürtelsteifigkeit, schlechterem Abriebsverhalten und schlechteren Abriebsraten.

Aus der gattungsgemäßen US 5,318,643 ist ein Fahrzeugluftreifen für Nutzfahrzeuge mit Karkasse bekannt, in welche der Gürtel zwei Gürtellagen aufweist, deren Festigkeitsträger aus unterschiedlichen Corden ausgebildet ist.

Der Erfindung liegt die Aufgabe zugrunde in einfacher Weise einen Fahrzeugluftreifen für Nutzfahrzeuge zu schaffen, der eine hohe Umfangssteifigkeit des Gürtels, ein gutes Abriebbild und ein gutes Abriebverhalten bei hoher Haltbarkeit ermöglicht.

Die Aufgabe wird erfindungsgemäß durch die Ausbildung eines Fahrzeugluftreifens für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus mehreren von radial innen nach radial außen auf einander liegend angeordneten Gürtellagen ausgebildet ist, von denen wenigstens zwei Gürtellagen als Arbeitslagen ausgebildet sind, wobei die radial innere und die radial äußere der beiden Arbeitslagen Gürtellagen mit in Gummi eingebetteten parallelen Festigkeitsträgern aus Stahl sind, wobei die Festigkeitsträger der radial inneren Arbeitslage in ihrer Ausrichtung einen Winkel α zur Umfangsrichtung U mit 10°<α<24°und die Festigkeitsträger der radial äußeren Arbeitslage einen Winkel γ zur Umfangsrichtung U mit 10°≤γ≤24°einschließen, wobei in Umfangsrichtung U des Fahrzeugreifens gesehen die Festigkeitsträger der einen Arbeitslage eine entgegengesetzte axiale Neigungsrichtung zu den Festigkeitsträgern der anderen Arbeitslage aufweisen, gemäß den Merkmalen von Anspruch 1 gelöst, bei dem die Festigkeitsträger der radial inneren der beiden Arbeitslagen im Fahrzeugreifen einen anderen Außendurchmesser aufweisen als die Festigkeitsträger der radial äußeren der beiden Arbeitslagen und bei dem zwischen den beiden Arbeitslagen eine als Nullgradlage ausgebildete Gürtellage angeordnet ist mit in Gummi eingebetteten parallelen Festigkeitsträgern, die in ihrer Ausrichtung einen Winkel β mit 0°≤β≤<5° zur Umfangsrichtung U einschließen.

Es wird über die größere Oberfläche der Korde der einen Arbeistlage mit den größeren Korddurchmessern eine deutlich verbesserte Spanungsverteilung ermöglicht. Dabei wird über die andere Arbeitslage im Gürtel eine sehr hohe Steifigkeit erzielt bei reduzierten Spannungen im Bereich der Kordenden des Gürtels und zwischen den Arbeitslagen. Durch diese Ausbildung mit der Nullgradlage zwischen der Arbeitslage kann die Umfangssteifigkeit des Gürtels erhöht, was die Haltbarkeit positiv beeinflusst, und die Abriebsrate reduziert werden.

Besonders vorteilhaft ist die Ausbildung eines Fahrzeugluftreifens gemäß den Merkmalen von Anspruch 2, bei dem die Festigkeitsträger der radial inneren der beiden Arbeitslagen im Fahrzeugreifen einen kleineren Außendurchmesser aufweisen als die Festigkeitsträger der radial äußeren der beiden Arbeitslagen. Hierdurch wird gerade die am stärksten beanspruchte Arbeitslage und dadurch der Gürtel weiter in seiner Haltbarkeit verbessert.

Besonders vorteilhaft ist die Ausbildung eines Fahrzeugluftreifens gemäß den Merkmalen von Anspruch 3, bei dem der Außendurchmesser d₂ der Festigkeitsträger der Arbeitslage mit dem kleineren Außendurchmesser und der Außendurchmesser d₁ der Festigkeitsträger der Arbeitslage mit dem größeren Außendurchmesser mit d₁> (1,1 d2) ausgebildet sind. Hierdurch kann die Spannungsverteilung in dem entkoppelten Bereich zwischen den Lagen deutlich verbessert werden.

Besonders vorteilhaft ist die Ausbildung eines Fahrzeugluftreifens gemäß den Merkmalen von Anspruch 4, wobei in der Arbeitslage mit den Festigkeitsträger mit dem kleineren Außendurchmesser zusätzlich die Abstände jeweils zwischen den benachbarten Festigkeitsträgern innerhalb der Arbeitslage kleiner ausgebildet sind als die Abstände der benachbarten Festigkeitsträger der der beiden Arbeitslage mit den Festigkeitsträgern mit dem größeren Außendurchmesser. Hierdurch kann zusätzlich die Spannung in der kritischen Lage reduziert und das Wachstum eines Risses - wenn er dennoch auftreten sollte - verlangsamt werden.

Besonders vorteilhaft ist die Ausbildung eines Fahrzeugluftreifens gemäß den Merkmalen von Anspruch 5, wobei die Abstände a₂ zwischen den Festigkeitsträgern der Arbeitslage mit den kleineren Abständen ihrer Festigkeitsträger und die Abstände a₁ zwischen den Festigkeitsträgern der Arbeitslage mit den größeren Abständen ihrer Festigkeitsträger mit a₁> (1,1 a₂) ausgebildet sind. Hierdurch können die Spannungsverteilung zwischen den Lagen und Kordkräfte optimiert werden.

Besonders vorteilhaft ist die Ausbildung eines Fahrzeugluftreifens gemäß den Merkmalen von Anspruch 6, wobei die Abstände a₁ zwischen den Festigkeitsträgern der Arbeitslage mit den größeren Abständen ihrer Festigkeitsträger mit 0,80mm ≤ a₁≤1,30mm ausgebildet sind. Hierdurch kann die Arbeitslage bei reduzierter Spannung ausreichend steif mit Interaktion zwischen den Festigkeitsträgern ausgebildet werden.

Besonders vorteilhaft ist die Ausbildung eines Fahrzeugluftreifens gemäß den Merkmalen von Anspruch 7, bei dem die Abstände a₂ zwischen den Festigkeitsträgern der Arbeitslage mit den kleineren Abständen ihrer Festigkeitsträger mit 0,40mm ≤ a₂≤0,75mm ausgebildet sind. Hierdurch kann eine maximale Umfangs- und Schersteifigkeit bei Begrenzung der auftretenden Spannungen zwischen den Korden umgesetzt werden.

Besonders vorteilhaft ist die Ausbildung eines Fahrzeugluftreifens gemäß den Merkmalen von Anspruch 8, bei dem die Masse G₁ des Stahls der einen Arbeitslage pro Flächeneinheit und für die Masse G₂ des Stahls der anderen Arbeitslage pro Flächeneinheit mit (0,9 G₂)≤ G₁≤(1,1 G₂) ausgebildet ist. Hierdurch kann ermöglicht werden, dass Spannungen pro Fläche in den Arbeitslagen nahezu gleich groß sind. Die Arbeitslagen bilden somit ein nahezu balanciertes Paket um unregelmäßigen Abrieb besonders gut zu vermeiden.

Besonders vorteilhaft ist die Ausbildung eines Fahrzeugluftreifens gemäß den Merkmalen von Anspruch 9, bei dem radial außerhalb der radial äußeren Arbeitslage auf der äußeren Arbeitslage eine weitere Gürtellage mit parallelen in Gummi eingebetteten Festigkeitsträgern ausgebildet ist. Hierdurch kann der Schutz gegen das Eindringen von Steinen weiter verbessert werden.

Besonders vorteilhaft ist die Ausbildung eines Fahrzeugluftreifens gemäß den Merkmalen von Anspruch 10, bei dem die weitere Gürtellage als Nullgradlage ausgebildet ist, deren Festigkeitsträger in ihrer Ausrichtung einen Winkel δ zur Umfangsrichtung U des Fahrzeugluftreifens mit 0°≤ δ ≤5°einschließen. Hierdurch kann die Umfangssteifigkeit weiter erhöht und der Abrieb weiter verbessert werden.

Besonders vorteilhaft zur Erzielung eines optimalen Abriebsbildes ist die Ausbildung eines Fahrzeugluftreifens gemäß den Merkmalen von Anspruch 11, bei dem die Festigkeitsträger der zusätzlichen Gürtellage in ihrer Ausrichtung einen Winkel δ zur Umfangsrichtung U des Fahrzeugluftreifens mit 10°≤8≤90° - insbesondere mit 15°≤8≤45°- einschließen.

Besonders vorteilhaft ist die Ausbildung eines Fahrzeugluftreifens gemäß den Merkmalen von Anspruch 12, bei dem radial innerhalb der radial inneren Arbeitslage zwischen der Karkasse und der radial inneren Arbeitslage eine weitere Gürtellage mit parallelen in Gummi eingebetteten Festigkeitsträgern ausgebildet ist, deren Festigkeitsträger in ihrer Ausrichtung einen Winkel ε zur Umfangsrichtung U des Fahrzeugluftreifens - insbesondere mit 45°≤ε≤90° - einschließen. Hierdurch kann die Bewegung der Arbeitslagen weiter reduziert und die Haltbarkeit weiter verbessert werden.

Besonders vorteilhaft ist die Ausbildung eines Fahrzeugluftreifens gemäß den Merkmalen von Anspruch 13, bei dem die radial zwischen den beiden Arbeitslagen angeordnete Nullgradlage in ihrer axialen Erstreckung b im Fahrzeugluftreifen - insbesondere mindestens 10 mm - kleiner ausgebildet ist als jede der beiden Arbeitslagen. Die Nullgradlage wird hierdurch in ihrer Bewegung im Gürtel stark beschränkt und hierdurch gegen Bruch ihrer Festigkeitsträger noch besser geschützt.

Besonders vorteilhaft ist die Ausbildung eines Fahrzeugluftreifens gemäß den Merkmalen von Anspruch 14, bei dem die Nullgradlage zu beiden axialen Seiten hin innerhalb des axialen Erstreckungsbereiches einer jeden der beiden Arbeitslagen endet. Die Nullgradlage wird hierdurch in ihrer Bewegung im Gürtel stark beschränkt und hierdurch gegen Bruch ihrer Festigkeitsträger noch besser geschützt.

Besonders vorteilhaft ist die Ausbildung eines Fahrzeugluftreifens gemäß den Merkmalen von Anspruch 15, wobei die radial äußere der beiden Arbeitslagen in ihrer axialen Erstreckung c im Fahrzeugluftreifen kleiner ausgebildet ist als die radial innere der beiden Arbeitslagen. Scherung zwischen den Arbeitslagen kann hierdurch zusätzlich reduziert und die Haltbarkeit verbessert werden. Außerdem kann hierdurch eine verbesserte Steifigkeitsverteilung und dadurch ein verbessertes Abriebsbild ermöglicht werden. Besonders vorteilhaft ist die Ausbildung, bei der die radial äußere der beiden Arbeitslagen zu beiden axialen Seiten hin innerhalb des axialen Erstreckungsbereiches der radial inneren der beiden Arbeitslagen endet. Die Scherung zwischen den Arbeitslagen kann hierdurch zusätzlich weiter reduziert und die Haltbarkeit verbessert werden. Außerdem kann hierdurch eine weiter verbesserte Steifigkeitsverteilung und dadurch ein verbessertes Abriebsbild ermöglicht werden.

Besonders vorteilhaft ist die Ausbildung eines Fahrzeugluftreifens gemäß den Merkmalen von Anspruch 16, bei dem die Festigkeitsträger der Nullgradlage(n) Festigkeitsträger aus Stahl sind. Die Wirkung der Nullgradlage(n) kann hierdurch weiter verbessert und die Umfangssteifigkeit erhöht werden. Abrieb und Haltbarkeit können hierdurch weiter verbessert werden.

Besonders vorteilhaft ist die Ausbildung eines Fahrzeugluftreifens gemäß den Merkmalen von Anspruch 17, bei dem die Festigkeitsträger wenigstens der zwischen den Arbeitslagen angeordneten Nullgradlage High-Elongation-Korde (HE) sind. Hierdurch kann eine Erhebung des Reifens im Aufbauprozess des Reifens einfach ermöglicht werden.

Die Erfindung wird im Folgenden an Hand der in den Fig.1 bis Fig.8 dargestellten Ausführungsbeispiele eines Nutzfahrzeugluftreifens radialer Bauart erläutert. Darin zeigen
- Fig. 1: die Querschnittsdarstellung eines Fahrzeugluftreifens für Nutzfahrzeuge radialer Bauart,
- Fig.2: eine Draufsicht auf den Gürtel von Fig.1 gemäß Schnitt II - II von Fig.1, bei der zur Vereinfachung alle anderen Bauteile des Reifens nicht dargestellt sind,
- Fig.3: eine ausschnittsweise Querschnittsdarstellung eines Fahrzeugluftreifens analog zur Darstellung von Fig.1 mit alternativer Gürtelausbildung,
- Fig.4: Draufsicht auf den Gürtel von Fig.3 gemäß Schnitt IV - IV von Fig.3, bei der zur Vereinfachung alle anderen Bauteile des Reifens nicht dargestellt sind,
- Fig.5: eine ausschnittsweise Querschnittsdarstellung eines Fahrzeugluftreifens analog zur Darstellung von Fig. 1 mit weiterer alternativer Ausbildung des Gürtels,
- Fig.6: Draufsicht auf den Gürtel von Fig.5 gemäß Schnitt VI - VI von Fig.5, bei der zur Vereinfachung alle anderen Bauteile des Reifens nicht dargestellt sind,
- Fig.7: Querschnitt der beiden Arbeitslagen des Gürtels jeweils in Schnittdarstellung senkrecht zur Ausrichtung der Festigkeitsträger,
- Fig. 8: Querschnitt der beiden Arbeitslagen des Gürtels jeweils in Schnittdarstellung senkrecht zur Ausrichtung der Festigkeitsträger in alternativer Ausbildung zu Fig.7.

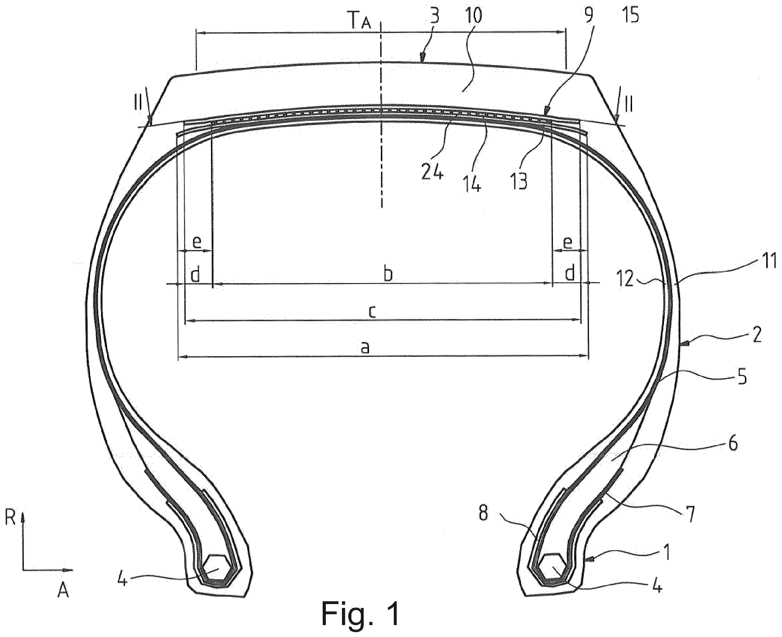

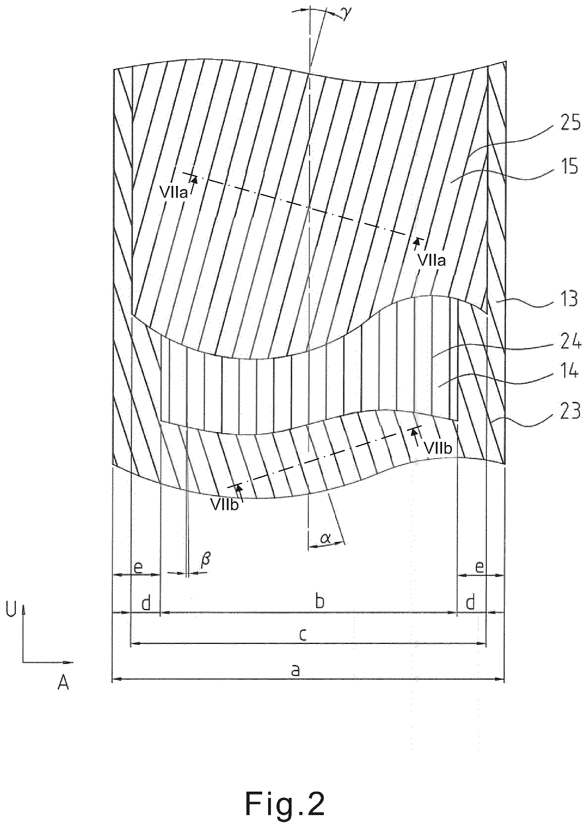

Fig. 1 und Fig.2 zeigen einen Nutzfahrzeugluftreifen radialer Bauart mit zwei in radialer Richtung R des Fahrzeugreifens erstreckten Seitenwänden 2 und einem axial dazwischen ausgebildeten Kronenbereich 3. Die Seitenwände sind an ihrem in radialer Richtung nach innen weisenden Erstreckungsende jeweils mit einem Wulstbereich 1 ausgebildet in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung entlang des radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 7. Die Karkasse ist in bekannter nicht näher dargestellter Weise aus einer in Umfangsrichtung U über den gesamten Umfang des Fahrzeugluftreifens erstreckten Karkassenlage mit in Gummi eingebetteten parallelen Korden - beispielsweise Stahlkorden - , welche sich im Bereich der Seitenwände 2 im Wesentlichen in radialer Richtung R und im Kronenbereich im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Material streifen.

Im Bereich der Reifenkrone 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher aus drei in radialer Richtung R übereinander und aufeinanderliegend angeordneten Gürtellagen 13, 14 und 15 ausgebildet ist. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Die radial innere Gürtellage 13 und die radial äußere Gürtellage 15 sind als Arbeitslagen des Reifens ausgebildet und erstrecken sich jeweils in Umfangsrichtung U über den gesamten Umfang des Fahrzeugluftreifens und in axialer Richtung A von linker Reifenschulter bis zur rechten Reifenschulter. Die Arbeitslage 13 ist aus einer Lage von in Gummi eingebetteten fadenförmigen parallelen Festigkeitsträgern 23 ausgebildet, welche sich über die gesamte in axialer Richtung A gemessene Breite a der Gürtellage 13 im Wesentlichen geradlinig erstrecken und einen Neigungswinkels α zur Umfangsrichtung U einschließen mit 10° ≤ α ≤ 24°. Die Arbeitslage 15 ist aus einer Lage von in Gummi eingebetteten fadenförmigen parallelen Festigkeitsträgern 25 ausgebildet, welche sich über die gesamte axiale Breite c der Gürtellage 15 im Wesentlichen geradlinig erstrecken und einen Neigungswinkel γ zur Umfangsrichtung U einschließen mit 10≥°≤y≤24°. Die Neigungsrichtung der Festigkeitsträger 25 der Arbeitslagen 15 längs der Umfangsrichtung U gesehen ist in entgegengesetzter axialer Richtung A zur Neigungsrichtung der Festigkeitsträger 23 der Arbeitslage 13 ausgebildet. Die zwischen den beiden Arbeitslagen 15 und 13 ausgebildete dritte Gürtellage 14 erstreckt sich in Umfangsrichtung U über den gesamten Umfang des Fahrzeugluftreifens und in axialer Richtung von linker Reifenschulter zur rechten Reifenschulter und ist als 0°-Lage ausgebildet. Hierzu ist die Gürtellage 14 aus parallelen fadenförmigen in Gummi eingebetteten Festigkeitsträgern ausgebildet, die sich geradlinig über den gesamten Umfang des Fahrzeugluftreifens unter Einschluss eines Winkels β mit 0° ≤ β ≤ 5° zur Umfangsrichtung U erstrecken und somit im Wesentlichen in Umfangsrichtung U des Fahrzeugluftreifens ausgerichtet sind. Alle drei Gürtellagen 13, 14 und 15 erstrecken sich zu beiden axialen Seiten jeweils bis in eine Position in der jeweiligen Reifenschulter, die axial außerhalb der Bodenaufstandsfläche - dargestellt durch die axiale Breite Tₐ der Bodenaufstandsfläche, liegt. Die Gürtellage 14 ist über ihre gesamte axiale Erstreckung in direktem Berührkontakt sowohl zu der unter ihr angeordneten Arbeitslage 13 als auch zu der über ihr angeordneten Arbeitslage 15.

Die 0°-Lage 14 erstreckt sich in axialer Richtung A über eine axiale Breite b, die untere Arbeitslage 13 erstreckt sich in axialer Richtung A über eine axiale Breite a und die obere Arbeitslage 15 erstreckt sich in axialer Richtung A über eine axiale Breite c im Reifen mit a > c > b. Dabei erstreckt sich zu beiden axialen Seiten der 0°-Lage 14 die innere Arbeitslage 13 um eine axiale Erstreckungslänge e über die axiale Position des jeweiligen Gürtelrandes der 0°-Lage 14 hinaus. Ebenso erstreckt sich die äußere Arbeitslage 15 in beide axiale Richtungen jeweils um eine axiale Erstreckungslänge d über die axiale Position des jeweiligen Gürtelrandes der 0°-Lage 14 hinaus. Für die Erstreckungslängen e und d dieses Überhangs gilt e > d. Das Maß d ist dabei mit d ≥ 10 mm ausgebildet. Das Maß e ist im Ausführungsbeispiel mit e ≤ 60 mm ausgebildet. Auch im Bereich des Überhangs berühren sich die beiden Arbeitslagen 13 und 15 nicht.

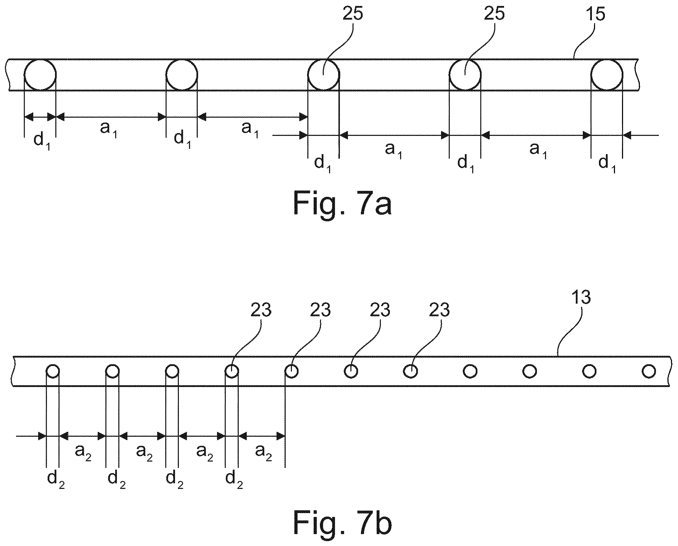

Fig. 7a zeigt schematisch den Querschnitt durch die radial äußere Arbeitslage 15 entsprechend der Querschnittsdarstellung VIIa-VIIa von Fig. 2, wobei der Schnitt senkrecht zur Längserstreckungsrichtung der Festigkeitsträger 25 der Arbeitslage 15 bezeichnet ist.

Fig. 7b zeigt die Querschnittsdarstellung entsprechend der Schnittdarstellung VIIb-VIIb der radial inneren Arbeitslage 13 von Fig. 2, wobei der Schnitt senkrecht zur Längserstreckungsrichtung der Festigkeitsträger 23 der Arbeitslage 13 gewählt ist.

Die Festigkeitsträger 25 sind Stahlcorde bekannter Art mit einem Außendurchmesser d₁. Benachbarte Festigkeitsträger 25 der Arbeitslage 15 sind jeweils mit einem senkrecht zur Erstreckungsrichtung der Festigkeitsträger 25 gemessenen Abstand a₁ zueinander angeordnet. Die Festigkeitsträger 23 der Arbeitslage 13 sind Stahlcorde bekannter Art. Die Festigkeitsträger 23 sind mit einem Außendurchmesser d₂ ausgebildet. Benachbarte Festigkeitsträger 23 der Arbeitslage 13 sind jeweils mit einem senkrecht zur Erstreckungsrichtung der Festigkeitsträger 23 gemessenen Abstand a₂ zueinander angeordnet. Die Abstände a₁ und a₂ sind mit a₁ > a₂ ausgebildet. Die Durchmesser d₁ der Festigkeitsträger 25 und die Durchmesser d₂ der Festigkeitsträger 23 sind mit d₁ > d₂ ausgebildet.
Dabei sind die Durchmesser d₁ und d₂ mit d₁ > (1,1 d₂) ausgebildet. Die Abstände a₂ und die Abstände a₁ sind mit a₁ > (1,1 a₂) ausgebildet.

Die Abstände a₁ sind dabei mit 0,80 mm ≤ a₁ ≤ 1,30 mm ausgebildet. Die Abstände a₂ sind mit 0,40 mm ≤ a₂ ≤ 0,75 mm ausgebildet.

Die Abstände a₁ und a₂ sowie die Durchmesser d₁ und d₂ sowie das verwendete Stahlkordmaterial sind dabei derart gewählt, dass in der von der Arbeitslage 13 bzw. von der Arbeitslage 15 in Umfangsrichtung U des Fahrzeugreifenes und in axialer Richtung A von den Arbeitslagen 13 bzw. von der Arbeitslage 15 aufgespannten, bedeckten Flächen die Stahlmasse G₁ pro Flächeneinheit des in der Arbeitslage 15 und die Stahlmasse G₂ pro Flächeneinheit des in der Arbeitslage 13 verwendeten Stahls mit (0,9 G₂) ≤ G₁ ≤ (1,1 G₂) ausgebildet ist. Beispielsweise ist die eingesetzte Masse G₁ der Arbeitslage 15 und die eingesetzte Masse G₂ der Arbeitslage 13 pro gleicher Flächeneinheit mit G₁ = G₂ ausgebildet.

Die Festigkeitsträger 23 der Arbeitslage 13 sind beispielsweise Stahlkorde des Typs 3x0,20+6x0,35. Die Festigkeitsträger 25 der Arbeitslage 15 sind beispielsweise Stahlkorde des Typs 3+8x0,35.

In einem Ausführungsbeispiel ist a₁ = 1,00 mm, a₂ = 0,60 mm, d₁ = 1,45mm und d₂ = 1,13mm ausgebildet.

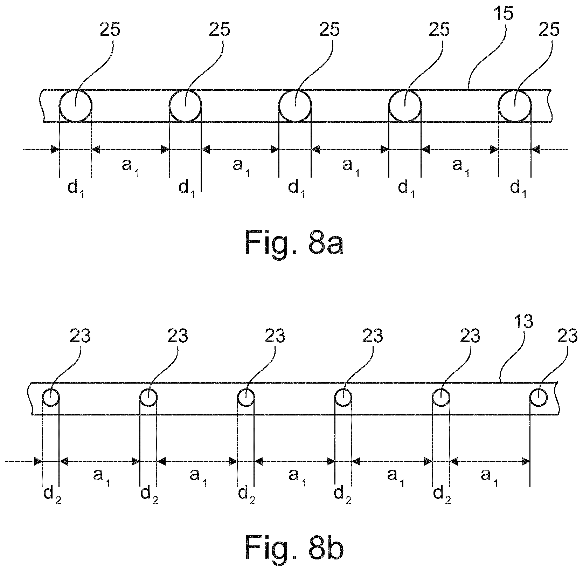

Die Fig. 8a und 8b zeigen ein alternatives Ausführungsbeispiel. Wie in dem in den Fig. 7a und 7b dargestellten Ausführungsbeispiel sind bei dem in den Fig.8a und fig.8b dargestellten Ausführungsbeispiel die Festigkeitsträger 25 mit Außendurchmessern d₁ und die Festigkeitsträger 23 mit Außendurchmesser d₂ ausgebildet, wobei d₁ > d₂ ausgebildet ist. Die Beziehungen zwischen d₁ und d₂ entsprechend den im Zusammenhang mit den Fig. 7a und 7b geschriebenen Beziehungen. Anders als in den Fig. 7a und 7b ist in dem in den Fig. 8a und 8b dargestellten Ausführungsbeispiel sowohl der Abstand der Festigkeitsträger 25 der Arbeitslage 15 a₁ und als auch der Abstand der benachbarter Festigkeitsträger 23 der Arbeitslage 13 a₁ und somit gleich groß gewählt. Darüber hinaus ist die Ausbildung - wie im Zusammenhang mit den Fig. 7a und 7b dargestellt - ausführt.

Die Festigkeitsträger 24 sind in einer Ausführung Stahlkorde bekannter Art. In einer anderen Ausführung sind die Festigkeitsträger 24 Stahlkorde, die in bekannter Weise als High-Elongation-Kord (HE-Kord) ausgebildet sind. Derartige hochdehnbare High-Elongation-Korde weisen einen E-Modul bei einer Dehnung zwischen 0% und 2 % auf, der geringer ist als ihr E-Modul bei einer Dehnung mit mehr als 2 %.

In einem Ausführungsbeispiel ist β = 1°, α = 20°, γ = 20°, d = 11 mm und e = 15 mm gewählt.

In einer nicht dargestellten alternativen Ausführung der oben genannten Ausführungen ist jeweils der Neigungswinkel α der Festigkeitsträger 23 der inneren Arbeitslage 13 größer ausgebildet als der Neigungswinkel γ der Festigkeitsträger 25 der äußeren Arbeitslage 15.

In einer nicht dargestellten alternativen Ausführung der oben genannten Ausführungen ist jeweils der Neigungswinkel α der Festigkeitsträger 23 der inneren Arbeitslage 13 kleiner ausgebildet als der Neigungswinkel α der Festigkeitsträger 25 der äußeren Arbeitslage 15.

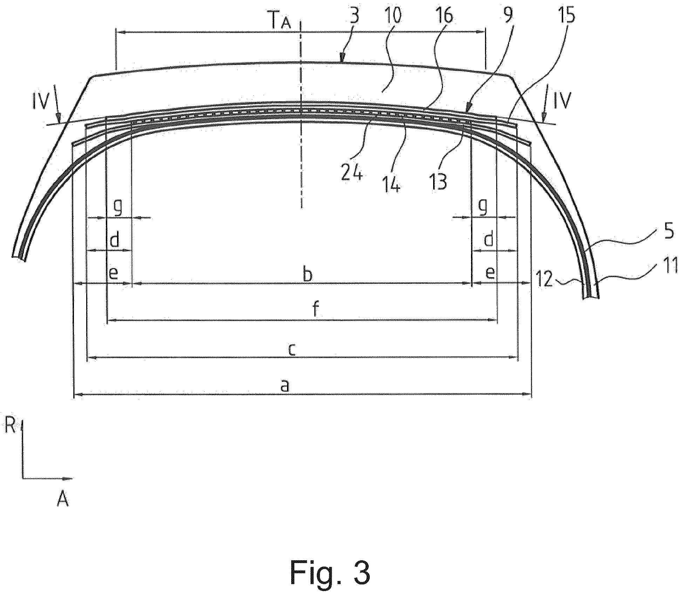

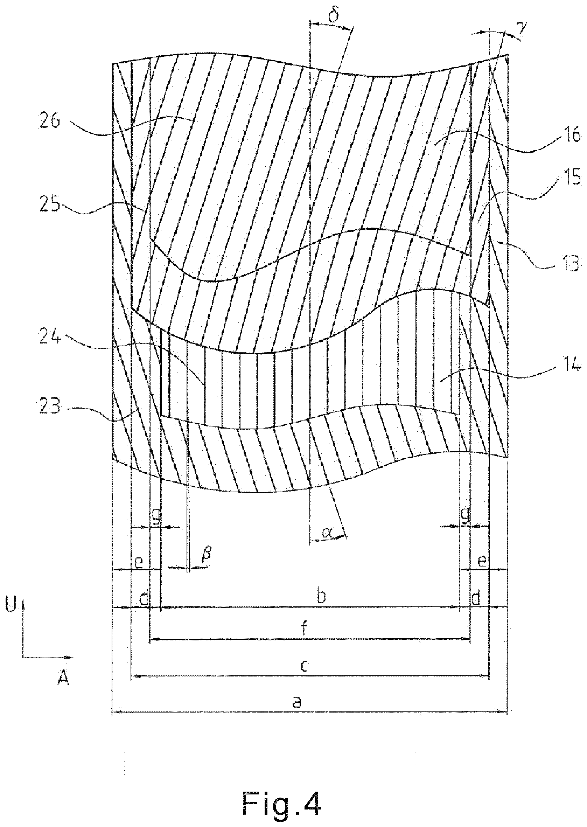

Fig.3 und Fig.4 zeigen eine weitere alternative Ausführung, bei der der Gürtel 9 zusätzlich zu den in den Fig.1 und Fig.2 dargestellten Gürtellagen 13, 14 und 15 auf der radialen Außenseite der äußeren Arbeitslage 15 mit einer zusätzlichen Gürtellage 16 ausgebildet ist, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 16 ist aus einer Lage von in Gummi eingebetteten fadenförmigen parallelen Festigkeitsträgern 26 ausgebildet, welche sich über die gesamte axiale Breite f der Gürtellage 16 im Wesentlichen geradlinig erstrecken und einen Neigungswinkel δ zur Umfangsrichtung U einschließen mit 15°≤b≤45°. Die Gürtellage 16 erstreckt sich über ihre gesamte axiale Erstreckung in unmittelbarem Berührkontakt zur Arbeitslage 15 und endet in axialer Richtung A an ihren beiden Gürtellagenrändern jeweils in einer axialen Position zwischen dem nächstliegenden Gürtellagenrand der 0°-Lage 14 und dem nächstliegenden Gürtellagenrand der radial äußeren Arbeitslage 15 im axialen Abstand g vom Gürtellagenrand der 0°-Lage 14 mit g < d. Die Breite f ist das Maß der axialen Erstreckung der zusätzliche Gürtellage 16 mit b < f < c < a.

Die Festigkeitsträger 26 der Gürtellage 16 sind in einem Ausführungsbeispiel mit gleicher Neigungsrichtung ausgebildet wie die Festigkeitsträger 25 der Arbeitslage 15.

Die Festigkeitsträger 26 sind Stahlkorde bekannter Art.

In einer anderen nicht dargestellten Ausführung ist die zusätzliche Gürtellage 16 als 0°-Lage ausgebildet und der Neigungswinkel δ ihrer über den gesamten Umfang des Fahrzeugluftreifens erstreckten Festigkeitsträger 26 mit 0° ≤ δ ≤ 5°. Bei Ausbildung der zusätzlichen Arbeitslage 16 als 0°-Lage sind die Festigkeitsträger 26 in einer Ausführung Stahlkorde bekannter Art. In einer anderen Ausführung sind die Festigkeitsträger 26 der als 0°-Lage ausgebildeten Arbeitslage 16 Stahlkorde, die in bekannter Weise als High-Elongation-Kord (HE-Kord) ausgebildet sind. Derartige hochdehnbare High-Elongation-Korde weisen einen E-Modul bei einer Dehnung zwischen 0% und 2 % auf, der geringer ist als ihr E-Modul bei einer Dehnung mit mehr als 2 %.

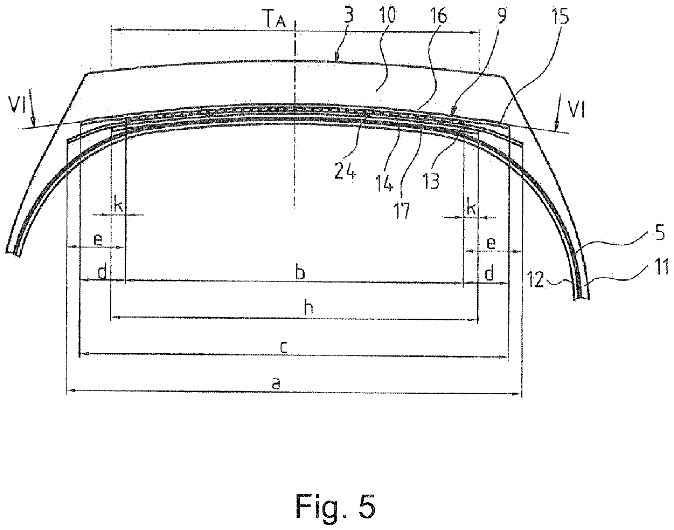

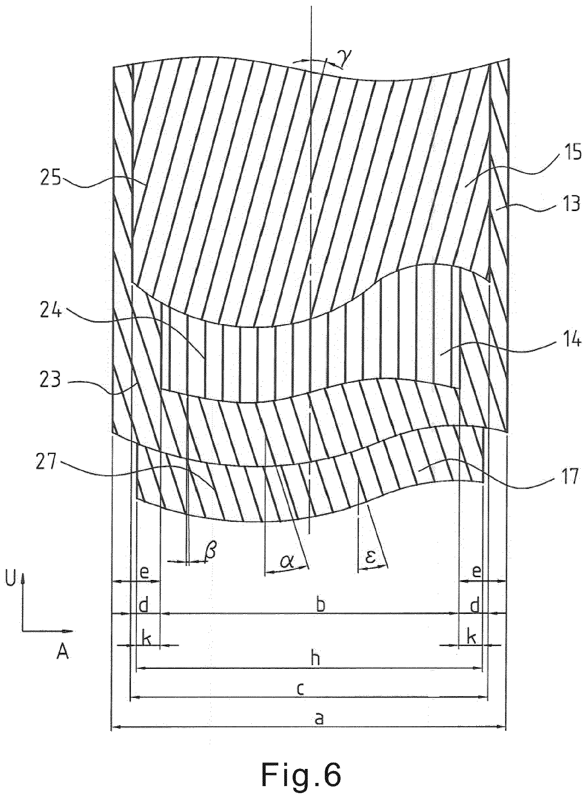

Fig.5 und Fig.6 zeigen ein weiteres alternatives Ausführungsbeispiel, bei dem anders als in bei den in Fig.1 und Fig.2 dargestellten und erläuterten Ausführungsbeispielen der Gürtel 9 zusätzlich mit einer in radialer Position zwischen radial innere Arbeitslage 13 und Karkasse 5 angeordneten Gürtellage 17 ausgebildet ist, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 17 ist aus einer Lage von in Gummi eingebetteten fadenförmigen parallelen Festigkeitsträgern 27 ausgebildet, welche sich über die gesamte axiale Breite h der Gürtellage 17 im Wesentlichen geradlinig erstrecken und einen Neigungswinkel ε zur Umfangsrichtung U einschließen mit 45° ≤ ε ≤ 90°, beispielsweise mit ε = 50°. Die Gürtellage 17 erstreckt sich über ihre gesamte axiale Erstreckung in unmittelbarem Berührkontakt zur Arbeitslage 13 und endet in axialer Richtung A an ihren beiden Gürtellagenrändern jeweils in einer axialen Position zwischen dem nächstliegenden Gürtellagenrand der 0°-Lage 14 und dem nächstliegenden Gürtellagenrand der radial äußeren Arbeitslage 15 im axialen Abstand k vom Gürtellagenrand der 0°-Lage 14 mit k < d < e. Die Breite h ist das Maß der axialen Erstreckung der zusätzliche Gürtellage 17 mit b<h<c<a.

Die Festigkeitsträger 27 der Gürtellage 17 sind in einem Ausführungsbeispiel mit gleicher Neigungsrichtung ausgebildet wie die Festigkeitsträger 23 der radial inneren Arbeitslage 13.

Die Festigkeitsträger 27 sind Stahlkorde bekannter Art.

In weiteren alternativen, nicht dargestellten Ausführungen ist bei den im Zusammenhang mit den Fig.3 und Fig.4 dargestellten Ausführungen mit zusätzlicher Gürtellage 16 auch die im Zusammenhang mit den Fig.5 und Fig.6 dargestellte zusätzliche innere Gürtellage 17 ausgebildet. In diesem Fall ist der Gürtel 9 aus einer 5-Lagenanordnung mit den von radial innen nach radial außen übereinander angeordneten Gürtellagen 17, 13, 14, 15 und 16 ausgebildet.

### Bezugszeichenliste

- 1: Wulstbereich
- 2: Seitenwand
- 3: Kronenbereich
- 4: Wulstkern
- 5: Karkasse
- 6: Apex (Kernreiter)
- 7: Karkassenumschlag
- 8: Wulstverstärkungsstreifen
- 9: Gürtel
- 10: Profilierter Laufstreifen
- 11: Seitenwandgummistreifen
- 12: Innenschicht
- 13: Gürtellage (Arbeitslage)
- 14: Gürtellage (Nullgradlage)
- 15: Gürtellage (Arbeitslage)
- 16: Gürtellage
- 17: Gürtellage
- 23: Festigkeitsträger
- 24: Festigkeitsträger
- 25: Festigkeitsträger
- 26: Festigkeitsträger
- 27: Festigkeitsträger

## Patentansprüche

1. Fahrzeugluftreifen für Nutzfahrzeuge mit einer Karkasse (5), mit einem radial außerhalb der Karkasse (5) aufgebauten Gürtel (9) und mit einem radial außerhalb des Gürtels (9) auf dem Gürtel (9) aufgebauten profilierten Laufstreifen (10), wobei der Gürtel (9) aus mehreren von radial innen nach radial außen auf einander liegend angeordneten Gürtellagen (13,14,15) ausgebildet ist, von denen wenigstens zwei Gürtellagen (13,15) als Arbeitslagen ausgebildet sind, wobei die radial innere (13) und die radial äußere (15) der beiden Arbeitslagen Gürtellagen mit in Gummi eingebetteten parallelen Festigkeitsträgern (23,25) aus Stahl sind, wobei die Festigkeitsträger (23) der radial inneren Arbeitslage (13) in ihrer Ausrichtung einen Winkel α zur Umfangsrichtung U mit 10°≤α≤24°und die Festigkeitsträger (25) der radial äußeren Arbeitslage (15) einen Winkel γ zur Umfangsrichtung U mit 10°≤γ≤24°einschließen, wobei in Umfangsrichtung U des Fahrzeugreifens gesehen die Festigkeitsträger (23) der einen Arbeitslage (13) eine entgegengesetzte axiale Neigungsrichtung zu den Festigkeitsträgern (25) der anderen Arbeitslage (15) aufweisen, **wobei die Festigkeitsträger (23) der radial inneren (13) der beiden Arbeitslagen (13,15) im Fahrzeugreifen einen anderen Außendurchmesser aufweisen als die Festigkeitsträger (25) der radial äußeren (15) der beiden Arbeitslagen (13,15),**
**dadurch gekennzeichnet,**
**dass zwischen den beiden Arbeitslagen (13,15) eine als Nullgradlage ausgebildete Gürtellage (14) angeordnet ist mit in Gummi eingebetteten parallelen Festigkeitsträgern (24), die in ihrer Ausrichtung einen Winkel β mit 0°≤β≤5° zur Umfangsrichtung U einschließen.**

2. Fahrzeugluftreifen gemäß den Merkmalen von Anspruch 1,
wobei die Festigkeitsträger (23) der radial inneren (13) der beiden Arbeitslagen (13,15) im Fahrzeugreifen einen kleineren Außendurchmesser aufweisen als die Festigkeitsträger (25) der radial äußeren (15) der beiden Arbeitslagen (13,15).

3. Fahrzeugluftreifen gemäß den Merkmalen von einem oder mehreren der vorangegangenen Ansprüche,
wobei der Außendurchmesser d₂ der Festigkeitsträger (23) der Arbeitslage (13) mit dem kleineren Außendurchmesser und der Außendurchmesser d₁ der Festigkeitsträger (25) der Arbeitslage (15) mit dem größeren Außendurchmesser mit d₁> (1,1 d₂) ausgebildet sind.

4. Fahrzeugluftreifen gemäß den Merkmalen von einem oder mehreren der vorangegangenen Ansprüche,
wobei in der Arbeitslage (13) mit den Festigkeitsträger (23) mit dem kleineren Außendurchmesser zusätzlich die Abstände jeweils zwischen den benachbarten Festigkeitsträgern (23) innerhalb der Arbeitslage (13) kleiner ausgebildet sind als die Abstände der benachbarten Festigkeitsträger (25) der der beiden Arbeitslage (15) mit den Festigkeitsträgern (25) mit dem größeren Außendurchmesser.

5. Fahrzeugluftreifen gemäß den Merkmalen von Anspruch 4,
wobei die Abstände a₂ zwischen den Festigkeitsträgern (23) der Arbeitslage (13) mit den kleineren Abständen ihrer Festigkeitsträger (23) und die Abstände a₁ zwischen den Festigkeitsträgern (25) der Arbeitslage (15) mit den größeren Abständen ihrer Festigkeitsträger (25) mit a₁> (1,1 a₂) ausgebildet sind.

6. Fahrzeugluftreifen gemäß den Merkmalen von Anspruch 5,
wobei die Abstände a₁ zwischen den Festigkeitsträgern (25) der Arbeitslage (15) mit den größeren Abständen ihrer Festigkeitsträger (25) mit 0,80mm ≤ a₁≤1,30mm ausgebildet sind.

7. Fahrzeugluftreifen gemäß den Merkmalen von Anspruch 5,
wobei die Abstände a₂ zwischen den Festigkeitsträgern (23) der Arbeitslage (13) mit den kleineren Abständen ihrer Festigkeitsträger (23) mit 0,40mm ≤ a₂≤0,75mm ausgebildet sind.

8. Fahrzeugluftreifen gemäß den Merkmalen von einem oder mehreren der vorangegangenen Ansprüche,
wobei die Masse G₁ des Stahls der einen Arbeitslage (13) pro Flächeneinheit und für die Masse G₂ des Stahls der anderen Arbeitslage (15) pro Flächeneinheit mit (0,9 G₂)≤ G₁≤(1,1 G₂) ausgebildet ist.

9. Fahrzeugluftreifen gemäß den Merkmalen von einem der vorangegangenen Ansprüche,
wobei radial außerhalb der radial äußeren Arbeitslage (15) auf der äußeren Arbeitslage (15) eine weitere Gürtellage (16) mit parallelen in Gummi eingebetteten Festigkeitsträgern (26) ausgebildet ist.

10. Fahrzeugluftreifen gemäß den Merkmalen von Anspruch 9,
wobei die weitere Gürtellage (16) als Nullgradlage ausgebildet ist, deren Festigkeitsträger (26) in ihrer Ausrichtung einen Winkel δ zur Umfangsrichtung U des Fahrzeugluftreifens mit 0°≤ δ ≤5°einschließen.

11. Fahrzeugluftreifen gemäß den Merkmalen von Anspruch 9,
wobei die Festigkeitsträger (26) der zusätzlichen Gürtellage (16) in ihrer Ausrichtung einen Winkel δ zur Umfangsrichtung U des Fahrzeugluftreifens mit 10°≤δ≤90° - insbesondere mit 15°≤δ≤45°- einschließen.

12. Fahrzeugluftreifen gemäß den Merkmalen von einem der vorangegangenen Ansprüche,
wobei radial innerhalb der radial inneren Arbeitslage (13) zwischen der Karkasse (5) und der radial inneren Arbeitslage (13) eine weitere Gürtellage (17) mit parallelen in Gummi eingebetteten Festigkeitsträgern (27) ausgebildet ist, deren Festigkeitsträger (27) in ihrer Ausrichtung einen Winkel s zur Umfangsrichtung U des Fahrzeugluftreifens - insbesondere mit 45°≤ε≤90° - einschließen.

13. Fahrzeugluftreifen gemäß den Merkmalen von Anspruch 1,
wobei die radial zwischen den beiden Arbeitslagen (13,15) angeordnete Nullgradlage (14) in ihrer axialen Erstreckung b im Fahrzeugluftreifen - insbesondere mindestens 10 mm - kleiner ausgebildet ist als jede der beiden Arbeitslagen (13,15).

14. Fahrzeugluftreifen gemäß den Merkmalen von Anspruch 11,
wobei die Nullgradlage (14) zu beiden axialen Seiten hin innerhalb des axialen Erstreckungsbereiches einer jeden der beiden Arbeitslagen (13,15) endet.

15. Fahrzeugluftreifen gemäß den Merkmalen von einem der vorangegangenen Ansprüche,
wobei die radial äußere der beiden Arbeitslagen (15) in ihrer axialen Erstreckung c im Fahrzeugluftreifen kleiner ausgebildet ist als die radial innere der beiden Arbeitslagen (13),
wobei insbesondere die radial äußere (15) der beiden Arbeitslagen (13,15) zu beiden axialen Seiten hin innerhalb des axialen Erstreckungsbereiches der radial inneren (13) der beiden Arbeitslagen (13,15) endet.

16. Fahrzeugluftreifen gemäß den Merkmalen von einem der Ansprüche **1 und 10,**
wobei die Festigkeitsträger (24,26) der Nullgradlage(n) (14,16) Festigkeitsträger aus Stahl sind.

17. Fahrzeugluftreifen gemäß den Merkmalen von einem der Ansprüche **1 und 10,**
wobei die Festigkeitsträger (24) wenigstens der zwischen den Arbeitslagen (13,15) angeordneten Nullgradlage (14) High-Elongation-Korde (HE) sind.

## Claims

1. Pneumatic vehicle tyre for utility vehicles, having a carcass (5), having a belt (9) constructed radially outside the carcass (5), and having a profiled tread (10) constructed on the belt (9) radially outside the belt (9), wherein the belt (9) is formed from multiple belt plies (13, 14, 15) arranged lying one on top of the other from the radial inside to the radial outside, of which at least two belt plies (13, 15) are formed as working plies, wherein the radially inner (13) and the radially outer (15) of the two working plies are belt plies with parallel strengthening members (23, 25) composed of steel embedded in rubber, wherein the strengthening members (23) of the radially inner working ply (13) enclose, in terms of their orientation, an angle α with the circumferential direction U, where 10°≤α≤24°, and the strengthening members (25) of the radially outer working ply (15) enclose an angle γ with the circumferential direction U, where 10°≤γ≤24°, wherein, as viewed in the circumferential direction U of the vehicle tyre, the strengthening members (23) of one working ply (13) have an opposite axial direction of inclination in relation to the strengthening members (25) of the other working ply (15), wherein the strengthening members (23) of the radially inner (13) of the two working plies (13, 15) in the vehicle tyre have a different outer diameter than the strengthening members (25) of the radially outer (15) of the two working plies (13, 15),
**characterized**
**in that**, between the two working plies (13, 15), there is arranged a belt ply (14) in the form of a zero-degree ply, having parallel strengthening members (24) which are embedded in rubber and which enclose, in terms of their orientation, an angle β with the circumferential direction U, where 0°≤β≤5°.

2. Pneumatic vehicle tyre according to the features of Claim 1,
wherein the strengthening members (23) of the radially inner (13) of the two working plies (13, 15) in the vehicle tyre have a smaller outer diameter than the strengthening members (25) of the radially outer (15) of the two working plies (13, 15).

3. Pneumatic vehicle tyre according to the features of one or more of the preceding claims,
wherein the outer diameter d₂ of the strengthening members (23) of the working ply (13) with the relatively small outer diameter and the outer diameter d₁ of the strengthening members (25) of the working ply (15) with the relatively large outer diameter are dimensioned such that d₁> (1.1d₂).

4. Pneumatic vehicle tyre according to the features of one or more of the preceding claims,
wherein, in the working ply (13) with the strengthening members (23) with the relatively small outer diameter, it is additionally the case that the spacings in each case between the adjacent strengthening members (23) within the working ply (13) are smaller than the spacings of the adjacent strengthening members (25) of the of the two working ply (15) with the strengthening members (25) with the relatively large outer diameter.

5. Pneumatic vehicle tyre according to the features of Claim 4,
wherein the spacings a₂ between the strengthening members (23) of the working ply (13) with the relatively small spacings of its strengthening members (23) and the spacings a₁ between the strengthening members (25) of the working ply (15) with the relatively large spacings of its strengthening members (25) are dimensioned such that a₁> (1.1a₂).

6. Pneumatic vehicle tyre according to the features of Claim 5,
wherein the spacings a₁ between the strengthening members (25) of the working ply (15) with the relatively large spacings of its strengthening members (25) are dimensioned such that 0.80 mm≤a₁≤1.30 mm.

7. Pneumatic vehicle tyre according to the features of Claim 5,
wherein the spacings a₂ between the strengthening members (23) of the working ply (13) with the relatively small spacings of its strengthening members (23) are dimensioned such that 0.40 mm≤a₂≤0.75 mm.

8. Pneumatic vehicle tyre according to the features of one or more of the preceding claims,
wherein the mass G₁ of the steel of one working ply (13) per unit area and for the mass G₂ of the steel of the other working ply (15) per unit area are dimensioned such that (0.9G₂)≤G₁≤(1.1G₂).

9. Pneumatic vehicle tyre according to the features of one of the preceding claims,
wherein, on the radially outer working ply (15) radially outside the outer working ply (15), there is formed a further belt ply (16) with parallel strengthening members (26) embedded in rubber.

10. Pneumatic vehicle tyre according to the features of Claim 9,
wherein the further belt ply (16) is in the form of a zero-degree ply, the strengthening members (26) of which enclose, in terms of their orientation, an angle 5 with the circumferential direction U of the pneumatic vehicle tyre, where 0°≤δ≤5°.

11. Pneumatic vehicle tyre according to the features of Claim 9,
wherein the strengthening members (26) of the additional belt ply (16) enclose, in terms of their orientation, an angle δ with the circumferential direction U of the pneumatic vehicle tyre, where 10°≤δ≤90°, in particular 15°≤δ≤45°.

12. Pneumatic vehicle tyre according to the features of one of the preceding claims,
wherein, radially within the radially inner working ply (13), between the carcass (5) and the radially inner working ply (13), there is formed a further belt ply (17) with parallel strengthening members (27) embedded in rubber, the strengthening members (27) of which further belt ply enclose, in terms of their orientation, an angle ε with the circumferential direction U of the pneumatic vehicle tyre, in particular where 45°≤ε≤90°.

13. Pneumatic vehicle tyre according to the features of Claim 1,
wherein the zero-degree ply (14) arranged radially between the two working plies (13, 15) is, in terms of its axial extent b in the pneumatic vehicle tyre, formed so as to be, in particular at least 10 mm, smaller than each of the two working plies (13, 15).

14. Pneumatic vehicle tyre according to the features of claim 11,
wherein the zero-degree ply (14) ends, to both axial sides, within the axial region of extent of each of the two working plies (13, 15).

15. Pneumatic vehicle tyre according to the features of one of the preceding claims,
wherein the radially outer of the two working plies (15) is, in terms of its axial extent c in the pneumatic vehicle tyre, formed so as to be smaller than the radially inner of the two working plies (13),
wherein in particular, the radially outer (15) of the two working plies (13, 15) ends, to both axial sides, within the axial region of extent of the radially inner (13) of the two working plies (13, 15).

16. Pneumatic vehicle tyre according to the features of either of Claims 1 and 10,
wherein the strengthening members (24, 26) of the zero-degree ply (plies) (14, 16) are strengthening members composed of steel.

17. Pneumatic vehicle tyre according to the features of either of Claims 1 and 10,
wherein the strengthening members (24) at least of the zero-degree ply (14) arranged between the working plies (13, 15) are high-elongation cords (HE).

## Revendications

1. Pneumatique de véhicule pour des véhicules utilitaires avec une carcasse (5), avec une ceinture (9) construite radialement à l'extérieur de la carcasse (5) et avec une bande de roulement profilée (10) construite sur la ceinture (9) radialement à l'extérieur de la ceinture (9), dans lequel la ceinture (9) est constituée de plusieurs couches de ceinture (13, 14, 15) disposées l'une sur l'autre de radialement intérieur à radialement extérieur, dont au moins deux couches de ceinture (13, 15) forment des couches de travail, dans lequel les couches radialement intérieure (13) et radialement extérieure (15) des deux couches de travail sont des couches de ceinture avec des éléments de résistance parallèles (23, 25) en acier noyés dans le caoutchouc, dans lequel les éléments de résistance (23) de la couche de travail radialement intérieure (13) forment dans leur orientation un angle α avec la direction périphérique U avec 10°≤α≤24° et les éléments de résistance (25) de la couche de travail radialement extérieure (15) forment dans leur orientation un angle γ avec la direction périphérique U avec 10°≤γ≤24°, dans lequel, vus dans la direction périphérique du pneumatique de véhicule, les éléments de résistance (23) d'une couche de travail (13) présentent une direction d'inclinaison opposée par rapport aux éléments de résistance (25) de l'autre couche de travail (15), dans lequel les éléments de résistance (23) de la couche radialement intérieure (13) des deux couches de travail (13, 15) dans le pneumatique de véhicule présentent un autre diamètre extérieur que les éléments de résistance (25) de la couche radialement extérieure (15) des deux couches de travail (13, 15), **caractérisé en ce qu'**une couche de ceinture (14) réalisée sous forme de couche à zéro degré est disposée entre les deux couches de travail (13, 15) avec des éléments de résistance parallèles (24) noyés dans le caoutchouc, qui forment dans leur orientation un angle β avec la direction périphérique U avec 0°≤β≤5°.

2. Pneumatique de véhicule selon les caractéristiques de la revendication 1, dans lequel les éléments de résistance (23) de la couche radialement intérieure (13) des deux couches de travail (13, 15) dans le pneumatique de véhicule présentent un diamètre extérieur plus petit que les éléments de résistance (25) de la couche radialement extérieure (15) des deux couches de travail (13, 15).

3. Pneumatique de véhicule selon les caractéristiques d'une ou de plusieurs des revendications précédentes, dans lequel le diamètre extérieur d₂ des éléments de résistance (23) de la couche de travail (13) avec le plus petit diamètre extérieur et le diamètre extérieur d₁ des éléments de résistance (25) de la couche de travail (15) avec le plus grand diamètre extérieur sont formés avec d₁ > (1,1 d₂).

4. Pneumatique de véhicule selon les caractéristiques d'une ou de plusieurs des revendications précédentes, dans lequel dans la couche de travail (13) avec les éléments de résistance (23) ayant le plus petit diamètre extérieur les distances respectives entre les éléments de résistance voisins (23) à l'intérieur de la couche de travail (13) sont plus petites que les distances des éléments de résistance voisins (25) des des deux couches (15) de travail avec les éléments de résistance (25) ayant le plus grand diamètre extérieur.

5. Pneumatique de véhicule selon les caractéristiques de la revendication 4, dans lequel les distances a₂ entre les éléments de résistance (23) de la couche de travail (13) ayant les plus petites distances de ses éléments de résistance (23) et les distances a₁ entre les éléments de résistance (25) de la couche de travail (15) ayant les plus grandes distances de ses éléments de résistance (25) sont formées avec a₁ > (1,1 a₂).

6. Pneumatique de véhicule selon les caractéristiques de la revendication 5, dans lequel les distances a₁ entre les éléments de résistance (25) de la couche de travail (15) avec les plus grandes distances de ses éléments de résistance (25) sont formées avec 0,80 mm ≤ a₁ ≤ 1,30 mm.

7. Pneumatique de véhicule selon les caractéristiques de la revendication 5, dans lequel les distances a₂ entre les éléments de résistance (23) de la couche de travail (13) avec les plus petites distances de ses éléments de résistance (23) sont formées avec 0,40 mm ≤ a₂ ≤ 0,75 mm.

8. Pneumatique de véhicule selon les caractéristiques d'une ou de plusieurs des revendications précédentes, dans lequel la masse G₁ de l'acier d'une couche de travail (13) par unité de surface et pour la masse G₂ de l'acier de l'autre couche de travail (15) par unité de surface est formée avec (0,9 G₂) ≤ G₁ ≤ (1,1 G₂).

9. Pneumatique de véhicule selon les caractéristiques de l'une quelconque des revendications précédentes, dans lequel une autre couche de ceinture (16) avec des éléments de résistance parallèles (26) noyés dans le caoutchouc est formée sur la couche de travail extérieure (15) radialement à l'extérieur de la couche de travail radialement extérieure (15).

10. Pneumatique de véhicule selon les caractéristiques de la revendication 9, dans lequel l'autre couche de ceinture (16) est réalisée comme couche à zéro degré, dont les éléments de résistance (26) forment dans leur orientation un angle δ avec la direction périphérique U du pneumatique de véhicule avec 0° ≤ δ ≤ 5°.

11. Pneumatique de véhicule selon les caractéristiques de la revendication 9, dans lequel les éléments de résistance (26) de la couche de ceinture supplémentaire (16) forment dans leur orientation un angle δ avec la direction périphérique U du pneumatique de véhicule avec 10° ≤ δ ≤ 90°, en particulier avec 15° ≤ δ ≤ 45°.

12. Pneumatique de véhicule selon les caractéristiques de l'une quelconque des revendications précédentes, dans lequel une autre couche de ceinture (17) avec des éléments de résistance parallèles (27) noyés dans le caoutchouc est formée radialement à l'intérieur de la couche de travail radialement intérieure (13) entre la carcasse (5) et la couche de travail radialement intérieure (13), dont les éléments de résistance (27) forment dans leur orientation un angle ε avec la direction périphérique U du pneumatique de véhicule, en particulier avec 45° ≤ ε ≤ 90°.

13. Pneumatique de véhicule selon les caractéristiques de la revendication 1, dans lequel la couche à zéro degré (14) disposée radialement entre les deux couches de travail (13, 15) est plus courte dans son extension axiale b dans le pneumatique de véhicule - en particulier au moins 10 mm - que celle des deux couches de travail (13, 15).

14. Pneumatique de véhicule selon les caractéristiques de la revendication 11, dans lequel la couche à zéro degré (14) se termine vers ses deux côtés axiaux à l'intérieur de la zone d'extension axiale de chacune des deux couches de travail (13, 15).

15. Pneumatique de véhicule selon les caractéristiques de l'une quelconque des revendications précédentes, dans lequel la couche radialement extérieure des deux couches de travail (13, 15) est plus petite en son extension axiale c dans le pneumatique de véhicule que la couche radialement intérieure des deux couches de travail (13), dans lequel en particulier la couche radialement extérieure (15) des deux couches de travail (13, 15) se termine vers ses deux côtés axiaux à l'intérieur de la zone d'extension axiale de la couche radialement intérieure (13) des deux couches de travail (13,15).

16. Pneumatique de véhicule selon les caractéristiques d'une des revendications 1 et 10, dans lequel les éléments de résistance (24, 26) de la/des couche(s) à zéro degré (14, 16) sont des éléments de résistance en acier.

17. Pneumatique de véhicule selon les caractéristiques d'une des revendications 1 et 10, dans lequel les éléments de résistance (24) au moins de la couche à zéro degré (14) disposée entre les couches de travail (13, 15) sont des cordes à haut allongement (HE).
